# EUROPÄISCHE PATENTSCHRIFT

(11) **EP 1 398 188 B1**
(45) Veröffentlichungstag und Bekanntmachung des Hinweises auf die Patenterteilung: **12.10.2011**
(21) Anmeldenummer: 03018824.7
(22) Anmeldetag: 19.08.2003
(51) Int. Cl.: B60J 1/18, B60J 7/12

(54) **Cabriolet-Fahrzeug mit insbesondere einem Faltverdeck**
Convertible car, in particular with a foldable soft top
Véhicule convertible, en particulier avec un toit pliant souple

(30) Priorität: 11.09.2002 DE 10242044
(43) Veröffentlichungstag der Anmeldung: 17.03.2004
(73) Patentinhaber: Wilhelm Karmann GmbH, 49084 Osnabrück (DE)
(72) Erfinder: Hüdepohl, Stefan, 49143 Bissendorf (DE)
(74) Vertreter: Kronthaler, Schmidt & Coll.

(56) Entgegenhaltungen:
- EP-A- 0 332 812
- DE-A- 10 029 478
- US-A- 4 693 509
- US-A- 4 784 428

## Beschreibung

Die Erfindung betrifft ein Cabriolet-Fahrzeug mit insbesondere einem Faltverdeck, mit einer eine Heckscheibe aufweisenden Dachhaut gemäß dem Oberbegriff des Anspruchs 1.

Bei einem bekannten Cabriolet-Fahrzeug dieser Art (DE 100 29 478 A1 ) weist das Faltverdeck im Bereich seiner Dachhaut einen diese spannenden Verdeckspannbügel auf. In der Schließstellung des Faltverdecks ist ein unterer Randbereich der Heckscheibe auf dem Verdeckspannbügel direkt auflegbar, so daß die Dichtigkeit in diesem Auflagebereich im wesentlichen durch die mittels einer Verdeckkinematik erzeugten Spannkräfte gewährleistet ist.

Die Erfindung befaßt sich mit dem Problem, ein Cabriolet-Fahrzeug zu schaffen, dessen in Schließstellung des Faltverdecks auf dem Verdeckspannbügel aufliegende Heckscheibe mit geringem technischen Aufwand im Auflagebereich eine Verbesserung der Dichtigkeit und der Geräuschdämpfung sowie des optischen Gesamteindruckes im Heckbereich des Fahrzeugs ermöglicht.

Die Erfindung löst diese Aufgabe mit einem Cabriolet-Fahrzeug, dessen Faltverdeck die kennzeichnenden Merkmale des Anspruchs 1 aufweist. Hinsichtlich wesentlicher weiterer Ausgestaltungen wird auf die Ansprüche 2 bis 17 verwiesen.

Das Cabriolet-Fahrzeug mit dem erfindungsgemäß ausgebildeten Faltverdeck ist im unmittelbaren Bereich der Auflage der Heckscheibe auf dem Verdeckspannbügel mit einem weitgehend beliebig ausführbaren Verbinder als zusätzliche Baugruppe versehen, mit der unabhängig von der mittels der Verdeckkinematik steuerbaren Auflagekraft eine Scheibenverriegelung wirksam wird. Die zwischen Verdeckspannbügel und Heckscheibenrand vorgesehenen Verbinder bilden eine zusätzliche Verriegelung, die eine verbesserte Dichtigkeit im Auflagebereich gewährleistet. Damit ist gleichzeitig eine verbesserte Geräuschdämpfung erreicht und durch die lagegenau eingestellten Verbinder werden geringe Spaltmaße im Auflagebereich erzeugt, so daß auch der optische Gesamteindruck im heckseitigen Karosseriebereich verbessert ist.

Die Verbinder vermitteln eine zusätzliche Führung, Abstützung und Verriegelung der Heckscheibe, so daß eine unabhängig von der Verdeckkinematik einstellbare Endstellung der verbundenen Teile erreicht ist und die für die Bauteile der Verdeckkinematik funktional erforderlichen Toleranzmaße und Toleranzketten im Bereich zwischen Heckscheibe und Verdeckspannbügel minimiert werden. Neben den optischen Verbesserungen durch geringere Spaltmaße ist durch die Verriegelung der Heckscheibe deren Parallelität zum Verdeckspannbügel genauer einstellbar, so daß neben den geringen Spaltmaßen auch ein zwischen den Bauteilen befindliches Dichtungssystem optimal ausgelegt werden kann und durch eine gleichmäßige Belastung des Dichtungsmaterials dessen langzeitige Funktionalität gewährleistet ist.

Durch die Verbinder können aus der Fahrzeugkarosserie übertragene Schwingungen im Bereich des Scheibenrandes gedämpft und mithin die akustischen Eigenschaften und die Innenraumakustik insgesamt verbessert werden. Durch die Verbinder wird die Heckscheibe insgesamt straffer zwischen Dachhaut und Verdeckspannbügel fixiert, so daß diese Baueinheit geringere Scheibenvibrationen aufweist und in der Schließstellung der heckseitige Bereich des Faltverdecks zur Aufnahme hoher Fahrbelastungen verbessert ausgesteift ist.

Hinsichtlich wesentlicher weiterer Einzelheiten und vorteilhafter Ausgestaltungen der Erfindung wird auf die nachfolgende Beschreibung und die Zeichnung verwiesen, in der ein Ausführungsbeispiel des Cabriolet-Fahrzeuges mit der verbesserten Heckscheibenanbindung näher erläutert ist. In der Zeichnung zeigen:
- Fig. 1: eine Prinzipdarstellung eines ein Faltverdeck aufnehmenden Verdeckgestells mit auf einem Verdeckspannbügel aufliegender Heckscheibe,
- Fig. 2: eine vergrößerte Ausschnittsdarstellung des Auflagebereichs der Heckscheibe in Schließstellung, und
- Fig. 3: eine Ausschnittsdarstellung ähnlich Fig. 2 mit der Heckscheibe in einer ersten Öffnungsphase beim Abheben vom Verdeckspannbügel.

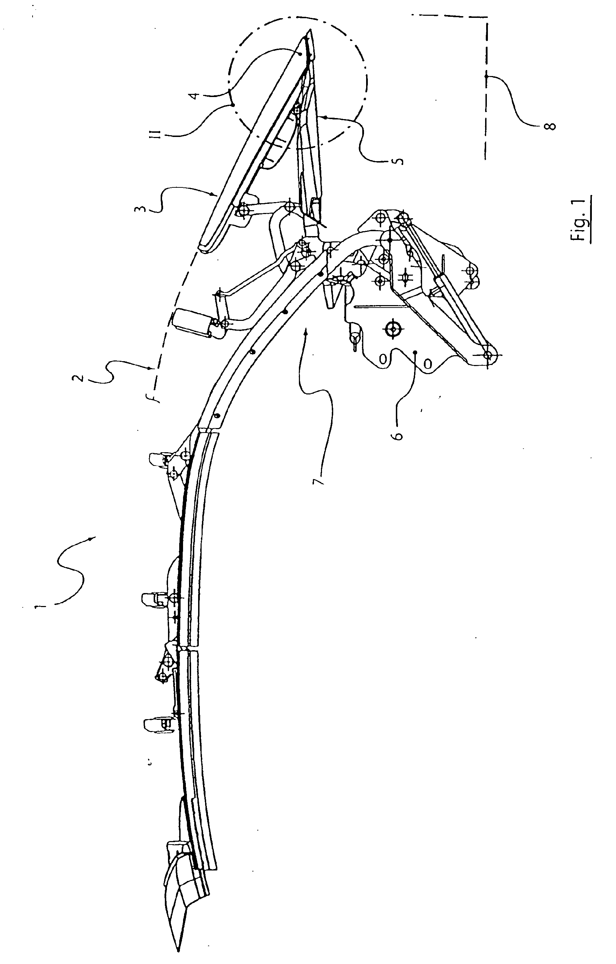

In Fig. 1 ist ein insgesamt mit 1 bezeichnetes Verdeckgestell für ein nicht näher ausgeführtes Cabriolet-Fahrzeug dargestellt. Dieses im wesentlichen spiegelbildlich zur Fahrzeuglängsmittelebene aufgebaute Verdeckgestell 1 trägt ein mit einer Strichlinie angedeutetes Faltverdeck 2, in dessen Dachhaut eine Heckscheibe 3 integriert ist. In der dargestellten Schließstellung des Faltverdecks 2 liegt ein unterer Randbereich 4 der Heckscheibe 3 auf einem insgesamt mit 5 bezeichneten Verdeckspannbügel auf, der mittels einer an einem Verdeckhauptlager 6 abgestützten Verdeckkinematik 7 mit mehreren Steuer- und Spannteilen verlagerbar ist. Bei der Verlagerung des Verdeckspannbügels 5 sind die nicht näher bezeichneten Teile der Verdeckkinematik 7 so wirksam, daß die Heckscheibe 4 bei einem Öffnungsvorgang des Faltverdeck 2 von dem Verdeckspannbügel 5 gelöst und danach das gesamte Verdeck in einem Verdeckkasten 8 eingeschwenkt werden kann. Bei der bereits gemäß DE 100 29 478 A1 vorgeschlagenen Lösung liegt in Schließstellung die Heckscheibe 3 unmittelbar auf dem Verdeckspannbügel 5 auf und mittels der Verdeckkinematik 7 ist eine entsprechende Spannverbindung zwischen den beiden Teilen hergestellt.

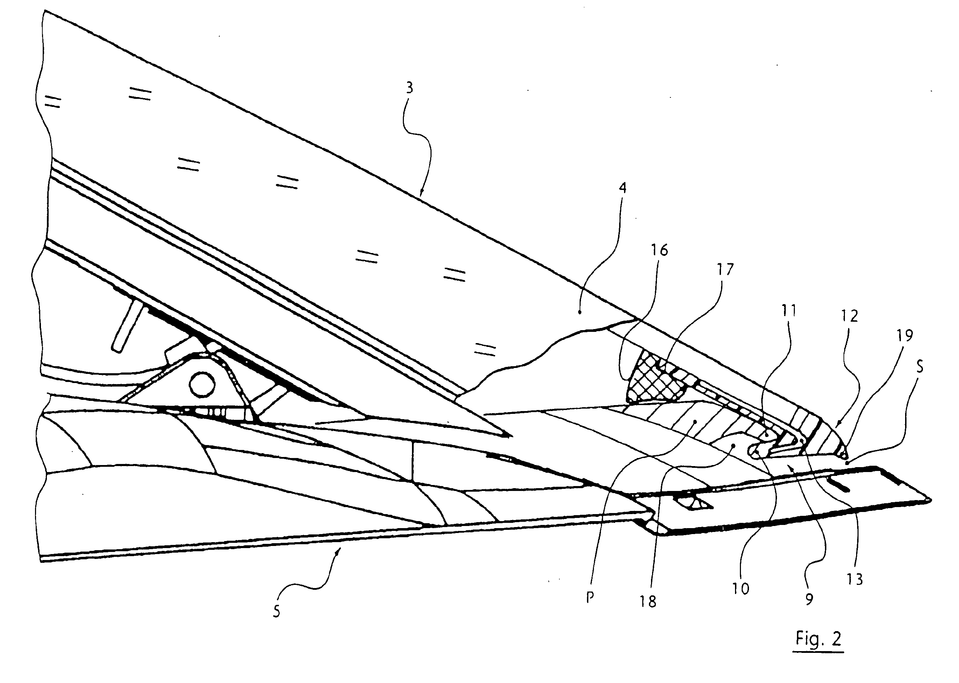

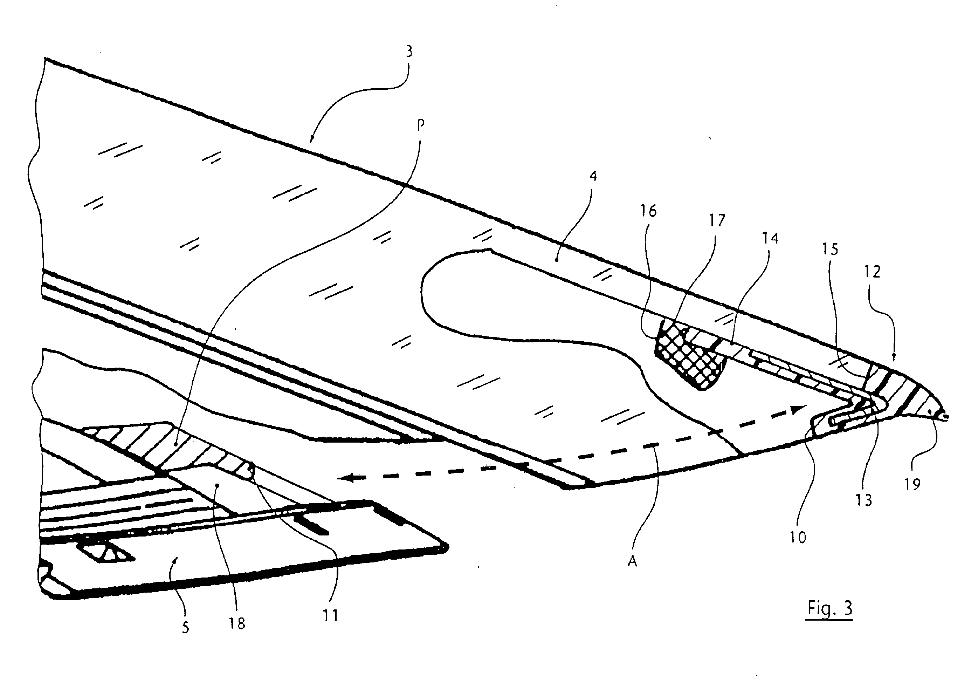

In Fig. 2 und 3 zeigen vergrößerte Ausschnittsdarstellungen gemäß II in Fig. 1 den Auflagebereich zwischen Heckscheibe 3 und Verdeckspannbügel 5, wobei zwischen diesen Teilen in erfindungsgemäßer Ausführung zumindest ein die aufliegende Heckscheibe 3 fixierender und diese beim Lösen vom Verdeckspannbügel 5 freigebender Verbinder 9 als zusätzliche Verbindungsbaugruppe vorgesehen ist.

Dieser in seiner Konstruktion weitgehend beliebig ausführbare Verbinder 9 bildet zwischen der Heckscheibe 3 und dem Verdeckspannbügel 5 einen form- und/oder kraftschlüssigen Verbindungseingriff, so daß unabhängig von der mittels der Verdeckkinematik 7 erzeugten Auflagekraft für die Heckscheibe 3 auf dem Bügel 5 eine zusätzliche direkte Halterung der beiden Teile erreicht ist. In zweckmäßiger Ausführung ist der Verbinder 9 so aufgebaut, daß dieser mittels der eine Relativbewegung von Heckscheibe 3 und Verdeckspannbügel 5 steuernden Verdeckkinematik 7 in der Verbindungsstellung fixierbar und aus dieser lösbar ist. Ebenso ist denkbar, Verbinder mit separatem Antriebsglied (nicht dargestellt) vorzusehen.

Die Zusammenschau von Fig. 2 und 3 verdeutlicht, daß bei der Öffnungs- bzw. Schließbewegung zwischen Heckscheibe 3 und Verdeckspannbügel 5 eine Hub-, Schwenk- und/oder Schubkomponente enthaltende, insbesondere bogenförmige Bewegungsbahn A erzeugt wird und diese von der Verdeckkinematik abgeleitete Relativbewegung auch zum Lösen bzw. Herstellen der Verbindung im Bereich des Verbinders 9 genutzt wird. Denkbar ist dabei auch, daß der Verbinder 9 durch eine gleichzeitige gegensinnige Verlagerung von Heckscheibe 3 und Verdeckspannbügel 5 fixiert bzw. gelöst wird.

Die in der Seitenansicht dargestellte Heckscheibe 3 erstreckt sich über einen Auflagebereich oberhalb des Verdeckspannbügels 5 im wesentlichen senkrecht zur Darstellungsebene, so daß in dieser leicht bogenförmigen Konturrichtung auch mehrere der Verbinder 9 vorgesehen sein können. Diese Verbinder 9 können dabei parallel und/oder als Reihenanordnung in Längsrichtung des Verdeckspannbügels 5 angeordnet sein (nicht dargestellt).

In der gemäß Fig. 2 und 3 näher dargestellten Ausführungsform ist der Verbinder 9 aus jeweiligen Riegelelementen in Form eines Hackenteils 10 und eines komplementären Gegengliedes 11 aufgebaut. Diese beiden Teile 10 und 11 werden vorzugsweise entsprechend der steuerbaren Bewegung A der Heckscheibe 3 und/oder des Verdeckspannbügels 5 verlagert. Denkbar ist dabei auch eine entsprechende vertikale Verlagerung der Teile 9, 10 (nicht dargestellt), so daß deren Einbaulage zueinander entsprechend auszurichten ist.

Die vergrößerte Darstellung gemäß Fig. 3 mit den voneinander gelösten Riegelelementen zeigt, daß die Heckscheibe 3 an ihrem unteren Randbereich 4 eine mit dem Hackenteil 10 versehene Formleiste 12 aufweist und gegenüberliegend das komplementäre Gegenglied 11 als ein Teil des Längsprofils P unmittelbar am Verdeckspannbügel 5 ausgeformt sein kann.

Die Formleiste 12 ist mehrlagig ausgebildet, wobei im Bereich des Hakenteiles 10 ein das keilförmig ausgeformte Verbindungsprofil stabilisierendes Aussteifungsteil 13 in die Formleiste 12 integriert ist. Die Formleiste 12 erstreckt sich dabei von der Innenseite 14 der Heckscheibe 3 über deren stirnseitigen Eckbereich 15 hinweg und verläuft dabei außenseitig im Bereich eines Lippenprofils 19 mit der Heckscheibe 3 in einer Ebene und geht mithin stufenlos in diese über. Als Aussteifungsteil 13 kann ein profiliertes und abgekantetes Metallband vorgesehen sein.

Die dargestellte Formleiste 12 besteht insbesondere aus einem an der Heckscheibe 3 angespritzten Kunststoff, wobei dieser mit dem einen oder, in Längsrichtung des Scheibenrandes 4, auch mit mehreren keilförmig ausgebildeten Hakenteilen 10 versehen ist bzw. sein kann. Ebenso ist denkbar, daß die Formleiste 12 als ein Einzelteil hergestellt ist und durch eine Klebe- und/oder Klemmverbindung in der dargestellten Einbaulage an der Heckscheibe 3 festgelegt ist wird (nicht dargestellt).

In einer weiteren Ausgestaltung dieses Auflagebereiches ist die Heckscheibe 3 im Nahbereich der Formleiste 12 mit einem an der Innenseite 14 der Heckscheibe 3 verlaufenden Dichtungsprofilteil 16 versehen. Dieses Dichtungsprofilteil 16 kann im wesentlichen parallel zur Formleiste 12 als streifenförmiges Bauteil vorgesehen sein, wobei das Dichtungsprofilteil 16 und die Formleiste 12 einen Überdeckungsbereich 17 aufweisen können und damit die Formleiste 12 zusätzlich fixiert ist.

In der dargestellten Ausführung des Gegengliedes 11 weist dieses als direkt am Verdeckspannbügel 5 geformtes Teil P eine Ausnehmung 18 auf, in die der Hackenteil 10 einführbar ist (Fig. 2). Ebenso ist denkbar, daß als Gegenglied ein mit dem Verdeckspannbügel 5 verbundenes und die nutförmige Ausnehmung 18 bildendes Ansatzteil (nicht dargestellt) vorgesehen ist.

In einer weiteren Ausführungsform kann vorgesehen sein, daß der Hakenteil 10 als ein sich einstückig in Längsrichtung der Formleiste 12 erstreckender Profilteil geformt ist und dieser in das sich über die Länge des Auflagebereiches am Verdeckspannbügel 5 erstreckende und entsprechend komplementär geformte Gegenglied 11 so eingreift, daß an Stelle der dargestellten punktuellen Hakenteil-Gegenglied-Verbindung(en) 10, 11 über die gesamte Auflagekonktur entsprechend der Kontur des Scheibenrandes 4 eine lösbare formschlüssige Verbindung erreicht ist.

Die Schließstellung der Heckscheibe 3 auf dem Verdeckspannbügel 5 gemäß Fig. 2 zeigt das optimale Zusammenwirken des Verbinders 9 mit dem Dichtungsprofilteil 16, so daß in diesem heckseitigen Bereich des Fahrzeugs mit einem geringen Spaltmaß S die beabsichtigten Verbesserungen der Dichtigkeit, der Geräuschdämpfung zum Innenraum hin und des optisch geschlosseneren Gesamteindruckes deutlich werden.

## Patentansprüche

1. Cabriolet-Fahrzeug mit insbesondere einem Faltverdeck (2), in dessen Dachhaut eine Heckscheibe (3) integriert ist, deren unterer Randbereich (4) in Schließstellung des Verdecks (2) auf einem die Dachhaut spannenden Verdeckspannbügel (5) auflegbar und bei einer Öffnungsbewegung (A) von diesem lösbar ist, **dadurch gekennzeichnet, daß** im Auflagebereich zwischen Heckscheibe (3) und Verdeckspannbügel (5) zumindest ein die aufliegende Heckscheibe (3) fixierender und diese beim Lösen vom Verdeckspannbügel (5) freigebender Verbinder (9) vorgesehen ist.

2. Cabriolet-Fahrzeug nach Anspruch 1, **dadurch gekennzeichnet, daß** der Verbinder zwischen Heckscheibe (3) und Verdeckspannbügel (5) einen form- und/oder kraftschlüssigen Verbindungseingriff bildet.

3. Cabriolet-Fahrzeug nach Anspruch 1 oder 2, **dadurch gekennzeichnet, daß** der Verbinder (9) mittels der eine Relativbewegung (A) von Heckscheibe (3) und Verdeckspannbügel (5) steuernden Verdeck-Kinematik (7) in der Verbindungsstellung fixierbar und aus dieser lösbar ist.

4. Cabriolet-Fahrzeug nach einem der Ansprüche 1 bis 3, **dadurch gekennzeichnet, daß** eine die Verbindungsstellung von Heckscheibe (3) und Verdeckspannbügel (5) lösende bzw. herstellende Hub-, Schwenk- und/oder Schubbewegung auf den Verbinder (9) übertragbar ist.

5. Cabriolet-Fahrzeug nach einem der Ansprüche 1 bis 4, **dadurch gekennzeichnet, daß** der Verbinder (9) durch eine gleichzeitige gegensinnige Verlagerung von Heckscheibe (3) und Verdeckspannbügel (5) fixierbar bzw. lösbar ist.

6. Cabriolet-Fahrzeug nach einem der Ansprüche 1 bis 5, **dadurch gekennzeichnet, daß** im Auflagebereich zwischen Heckscheibe (3) und Verdeckspannbügel (5) mehrere Verbinder (9) vorgesehen sind.

7. Cabriolet-Fahrzeug nach Anspruch 6, **dadurch gekennzeichnet, daß** mehrere Verbinder (9) parallel und /oder als Reihenanordnung in Längsrichtung des Verdeckspannbügels (5) bzw. des Scheibenrandes (4) angeordnet sind.

8. Cabriolet-Fahrzeug nach einem der Ansprüche 1 bis 7, **dadurch gekennzeichnet, daß** als Verbinder (9) jeweilige bei Bewegung der Heckscheibe (3) und/oder des Verdeckspannbügels (5) in Eingriffsstellung gelangende Riegelelemente in Form eines Hakenteils (10) und eines komplementären Gegengliedes (11) mit einer Ausnehmung (18) vorgesehen sind.

9. Cabriolet-Fahrzeug nach Anspruch 8, **dadurch gekennzeichnet, daß** die Heckscheibe (3) an ihrem unteren Scheibenrand (4) eine mit dem Hakenteil (10) versehene Formleiste (12) aufweist und gegenüberliegend das komplementäre Gegenglied (11) am Verdeckspannbügel (5) ausgeformt ist.

10. Cabriolet-Fahrzeug nach Anspruch 9, **dadurch gekennzeichnet, daß** die Formleiste (12) mehrlagig ausgebildet ist und diese im Bereich des Hakenteils (10) ein integriertes Aussteifungsteil (13) aufweist.

11. Cabriolet-Fahrzeug nach Anspruch 9, **dadurch gekennzeichnet, daß** sich die Formleiste (12) ausgehend von der Innenseite (14) der Heckscheibe (3) über den stirnseitigen Eckbereich (15) erstreckt und einen gleichebenig mit der Außenseite der Heckscheibe (3) verlaufenden Lippenprofilteil (19) bildet.

12. Cabriolet-Fahrzeug nach einem der Ansprüche 9 bis 11, **dadurch gekennzeichnet, daß** die Formleiste(12) aus einem an der Heckscheibe (3) angespritzten Kunststoff mit dem keilförmig ausgeformten Hakenteil (10) besteht.

13. Cabriolet-Fahrzeug nach einem der Ansprüche 9 bis 12, **dadurch gekennzeichnet, daß** die Formleiste (12) als Einzelteil hergestellt und durch eine Klebe- und/oder Klemmverbindung an der Heckscheibe (3) festgelegt ist.

14. Cabriolet-Fahrzeug nach einem der Ansprüche 9 bis 13, **dadurch gekennzeichnet, daß** die Heckscheibe (3) im Nahbereich der Formleiste (12) mit einem an der Innenseite (14) der Heckscheibe (3) verlaufenden Dichtungsprofilteil (16) versehen ist.

15. Cabriolet-Fahrzeug nach Anspruch 14, **dadurch gekennzeichnet, daß** das streifenförmige Dichtungsprofilteil (16) die Formleiste (12) zumindest bereichsweise überdeckt.

16. Cabriolet-Fahrzeug nach einem der Ansprüche 8 bis 15, **dadurch gekennzeichnet, daß** als Gegenglied (11) ein mit dem Verdeckspannbügel (5) verbundenes und die nutförmige Ausnehmung (18) bildendes Ansatzteil vorgesehen ist.

17. Cabriolet-Fahrzeug nach einem der Ansprüche 8 bis 16, **dadurch gekennzeichnet, daß** der Hakenteil (10) als sich einstückig in Längsrichtung der Formleiste (12) erstreckende Profilteil geformt ist, wobei dieser in das sich über die Länge des Auflagebereiches am Verdeckspannbügel (5) erstreckende und komplementär geformte Gegenglied (11) eingreift.

## Claims

1. A convertible vehicle, comprising in particular a foldable hood (2), said foldable hood (2) having a rear window (3) integrated in its roof skin, the lower edge region (4) of said rear window (3) being supportable, in the closed position of the hood (2), on a hood tensioning bow (5), which tensions the roof skin, and being releasable from said hood tensioning bow (5) in an opening movement (A), **characterised in that** at least one connector (9) is provided in the supporting area between the rear window (3) and the hood tensioning bow (5) for fixing the supported rear window (3) and for releasing it when disengaging it from the hood tensioning bow (5).

2. The convertible vehicle according to claim 1, **characterised in that** the connector defines an interlocking engagement and/or a frictional engagement between the rear window (3) and the hood tensioning bow (5).

3. The convertible vehicle according to claim 1 or 2, **characterised in that** the connector (9) can be fixed in the connecting position and released from it by the hood kinematic linkage assembly (7) which controls a relative movement (A) of the rear window (3) and the hood tensioning bow (5).

4. The convertible vehicle according to any one of claims 1 to 3, **characterised in that** a lifting, pivoting and/or pushing movement for disengaging and/or engaging the rear window (3) and the hood tensioning bow (5) can be transmitted to the connector (9).

5. The convertible vehicle according to any one of claims 1 to 4, **characterised in that** the connector (9) can be engaged and/or disengaged by a simultaneous, opposed displacement of the rear window (3) and the hood tensioning bow (5).

6. The convertible vehicle according to any one of claims 1 to 5, **characterised in that** several connectors (9) are provided in the supporting area between the rear window (3) and the hood tensioning bow (5).

7. The convertible vehicle according to claim 6, **characterised in that** several connectors (9) are arranged in parallel and/or in series in the longitudinal direction of the hood tensioning bow (5) or the window edge (4) respectively.

8. The convertible vehicle according to any one of claims 1 to 7, **characterised in that** respective locking elements in the form of a hook portion (10) and a complementary counter-member (11) with a recess (18) are provided as the connectors (9) which attain an engagement position by the movement of the rear window (3) and/or the hood tensioning bow (5).

9. The convertible vehicle according to claim 8, **characterised in that** the rear window (3) comprises, at its lower edge (4), a moulded strip (12) provided with the hook portion (10), and the complementary counter-member (11) is formed opposite, on the hood tensioning bow (5).

10. The convertible vehicle according to claim 9, **characterised in that** the moulded strip (12) has a multi-layer design and comprises an integrated reinforcement part (13) disposed adjacent to the hook portion (10).

11. The convertible vehicle according to claim 9, **characterised in that**, starting from the interior surface (14) of the rear window (3), the moulded strip (12) extends over the front corner area (15) and forms a lip profile (19) which extends in the same plane as the exterior surface of the rear window (3).

12. The convertible vehicle according to any one of claims 9 to 11, **characterised in that** the moulded strip (12) consists of a plastic material injection-moulded on the rear window (3) and comprising the wedge-shaped hook portion (10).

13. The convertible vehicle according to any one of claims 9 to 12, **characterised in that** the moulded strip (12) is manufactured as a single part and fixed to the rear window (3) by an adhesive and/or clamp connection.

14. The convertible vehicle according to any one of claims 9 to 13, **characterised in that** the rear window (3) is provided, adjacent to the moulded strip (12), with a sealing-profile part (16) extending along the interior surface (14) of the rear window (3).

15. The convertible vehicle according to claim 14, **characterised in that** the strip-shaped sealing-profile part (16) covers at least parts of the moulded strip (12).

16. The convertible vehicle according to any one of claims 8 to 15, **characterised in that** an add-on part, connected with the hood tensioning bow (5) and forming the groove-shaped recess (18), is provided as the counter-member (11).

17. The convertible vehicle according to any one of claims 8 to 16, **characterised in that** the hook portion (10) is formed as a profiled part extending integrally in the longitudinal direction of the moulded strip (12), said profiled part engaging the complementary-shape counter-member (11) which extends over the length of the supporting area on the hood tensioning bow (5).

## Revendications

1. Véhicule cabriolet, comprenant en particulier une capote pliante (2) qui présente une lunette arrière (3) intégrée dans la couverture de toit, le bord inférieur (4) de ladite lunette arrière (3) pouvant prendre appui, en position fermée de la capote (2), sur un étrier de tension de capote (5), ledit étrier (5) serrant la couverture de toit, et ledit bord inférieur étant détachable dudit étrier de tension de capote (5) par un mouvement d'ouverture (A), **caractérisé en ce qu'**au moins un connecteur (9) est disposé dans la zone d'appui entre la lunette arrière (3) et l'étrier de tension de capote (5), ce(s) connecteur(s) (9) étant destiné(s) à serrer la lunette arrière (3) en appui et à desserer cette dernière lors de son détachement dudit étrier de tension de capote (5).

2. Véhicule cabriolet selon la revendication 1, **caractérisé en ce que** le connecteur produit un raccordement par forme et/ou par force entre la lunette arrière (3) et l'étrier de tension de capote (5).

3. Véhicule cabriolet selon la revendication 1 ou 2, **caractérisé en ce que** le connecteur (9) peut être fixé en position de raccordement et libéré de cette position par la cinématique de capote (7) qui commande un mouvement relatif (A) de la lunette arrière (3) et de l'étrier de tension de capote (5).

4. Véhicule cabriolet selon l'une quelconque des revendications 1 à 3, **caractérisé en ce qu'**un mouvement de levage, de pivotement et/ou de poussée séparant et/ou raccordant la lunette arrière (3) et l'étrier de tension de capote (5) peut être transmis vers le connecteur (9).

5. Véhicule cabriolet selon l'une quelconque des revendications 1 à 4, **caractérisé en ce que** le connecteur (9) peut être serré et/ou desserré par un déplacement simultané et opposé de la lunette arrière (3) et de l'étrier de tension de capote (5).

6. Véhicule cabriolet selon l'une quelconque des revendications 1 à 5, **caractérisé en ce que** l'on prévoit plusieurs connecteurs (9) dans la zone d'appui entre la lunette arrière (3) et l'étrier de tension de capote (5).

7. Véhicule cabriolet selon la revendication 6, **caractérisé en ce que** l'on prévoit plusieurs connecteurs (9) parallèlement et/ou séquentiellement en direction longitudinale de l'étrier de tension de capote (5) et/ou du bord de lunette (4).

8. Véhicule cabriolet selon l'une quelconque des revendications 1 à 7, **caractérisé en ce que** l'on prévoit en tant que connecteurs (9) des éléments de verrouillage respectifs achevant une position de raccordement par déplacement de la lunette arrière (3) et/ou de l'étrier de tension de capote (5), ces éléments présentant la forme d'une partie à crochet (10) et d'un organe conjugué (11) complémentaire présentant un évidement (18).

9. Véhicule cabriolet selon la revendication 8, **caractérisé en ce que** la lunette arrière (3) comprend, à son bord inférieur (4), une baguette profilée (12) présentant la partie de crochet (10), et l'organe conjugué (11) complémentaire est constitué à côté, sur l'étrier de tension de capote (5).

10. Véhicule cabriolet selon la revendication 9, **caractérisé en ce que** la baguette profilée (12) est constituée en plusieurs couches et comprend un élément de renfort intégré (13), disposé au voisinage de la partie de crochet (10).

11. Véhicule cabriolet selon la revendication 9, **caractérisé en ce que** la baguette profilée (12) s'étend à partir de la face intérieure (14) de la lunette arrière (3) à travers le région de coin frontale (15) et constitue une partie avec un profil à lèvre (19) qui s'étend dans le même plan que la face extérieure de la lunette arrière (3).

12. Véhicule cabriolet selon l'une quelconque des revendications 9 à 11, **caractérisé en ce que** la baguette profilée (12) est constituée en matière plastique moulé par injection sur la lunette arrière (3) et comprenant la partie de crochet (10) cunéiforme.

13. Véhicule cabriolet selon l'une quelconque des revendications 9 à 12, **caractérisé en ce que** la baguette profilée (12) est produite en une seule pièce et fixée sur la lunette arrière (3) par collage et/ou serrage.

14. Véhicule cabriolet selon l'une quelconque des revendications 9 à 13, **caractérisé en ce que** la lunette arrière (3) présente, au voisinage de la baguette profilée (12), un profilé d'étanchéité (16) s'étendant le long de la face intérieure (14) de la lunette arrière (3).

15. Véhicule cabriolet selon la revendication 14, **caractérisé en ce que** le profilé d'étanchéité (16) en forme de bande recouvre au moins partiellement la baguette profilée (12).

16. Véhicule cabriolet selon l'une quelconque des revendications 8 à 15, **caractérisé en ce que** l'on prévoit en tant qu'organe conjugué (11) un embout relié avec l'étrier de tension de capote (5) et formant l'évidement (18) en forme de rainure.

17. Véhicule cabriolet selon l'une quelconque des revendications 8 à 16, **caractérisé en ce que** la partie de crochet (10) est réalisée sous forme d'une partie profilée s'étendant en une seule pièce en direction longitudinale de la baguette profilée (12), ladite partie profilée venant en prise dans l'organe conjugué (11) de forme complémentaire qui s'étend sur la longueur de la zone d'appui sur l'étrier de tension de capote (5).
